# EUROPEAN PATENT APPLICATION

(11) **EP 1 847 573 A1**
(43) Date of publication of application: **24.10.2007**
(21) Application number: 07008223.5
(22) Date of filing: 23.04.2007
(51) Int. Cl.: C09D 5/02, C09D 7/00

(54) **Water based coatings and process of preparing them**

(30) Priority: 21.04.2006 EP 06425277
(71) Applicant: Grassellini, Roberto, 20067 Tribiano (IT)
(72) Inventor: Grassellini, Roberto, 20067 Tribiano (IT)
(74) Representative: Gislon, Gabriele

(57) **Abstract**

A water-based coating formulation comprising a pH indicator having a basic pH transition range and which is capable of changing colour with the drying of the paint, and optionally pH modifiers for adjusting the pH of the formulation to basic values and at which said indicator changes colour.

## Description

The present invention relates to a water-based coatings and to a process of preparing them.

More particularly, the present invention relates to a formulation for white, ivory, straw-yellow and similar light-coloured coatings, *i.e.* all those colours capable of being perceptibly altered by the addition of even relatively small quantities of another colouring agent.

Water-based coatings for interiors are known and widely used. They comprise a plurality of products dispersed in water to form a paint that can be very easily applied to walls.

A problem with coatings or paints, particularly with light-coloured ones, lies in their application onto backgrounds obtained by identical or similar paints. Particularly, when a background of the same colour is coated with a white or light-coloured paint, the problem arises to make sure that the entire area for repainting has really been covered by the required quantity of paint.

In order to resolve such problem they are comprising noted water-based coating formulation comprising a pH indicator that it colors the paint when this is wetting and that with the drying of the paint it returns trasparent, leaving the single color wished for the paint. A problem of these formulations is given from the necessity to achieve a pH sufficient to their coloration because of the indicator and to maintain such value of pH for a sufficient time to the application of the paint in uniform way. A fast or too much too much slow drying would render not commercializzabile or useless the paint.

The object of the invention is to solve the above mentioned problem.

This object is achieved by means of the formulation according to claim 1 of the present application. According to the invention, the paint formulation comprises NaOH, AMP and at least one glycol selected between ethylene and diethylene glycol, in sufficient amount to keep the paint at the required pH (and thus colored) during the entire time of the application onto the background to be covered. Thereby a homogeneous application of the paint is ensured onto the background because the paint is colored.

The invention additionally concerns a process for the preparation of a paint for the preparation of a water-based coating formulation of the above described type, characterised by adding a pH indicator to said formulation during or subsequent to its production, in order to provide the same with a colour different from that of the paint after drying.

A further object of the invention is the use of a pH indicator for the preparation of a paint formulation in accordance with that above described, in order to provide the same with a temporary colour.

According to a preferred aspect of the invention, the pH of the formulation is comprised of between 7.0 and 10.5. Said basic pH of the paint is obtained by use of NAOH and AMP (2-amino-2-methyl-propanol) in combination with ethylene and diethylene glycol. Preferably, the formulation will comprise the following parts of the total formulation weight: NaOH within the range from 0.01% to 5%, AMP within the range from 0,1% to 5,0%, ethylene and diethylene glycol within the range from 0,2 to 6,0. Preferably, the total sum of glycols is comprised within the range from 1% to 8%, more preferably from 1% to 6% (w/w). Preferably, the ratio AMP to NaOH is comprised between 0,5 and 8%; and more preferably between 1,0:0,02 and 1,0:0,10.

Preferably, the pH indicator is coloured at basic pH values and transparent following transition. Preferred indicators are the phthaleins, and more preferably the phenolphthalein.

It is a particularly advantageous aspect of the formulation according to the invention that no substantial modifications to the normally used formulations are required, except for any potential increases in the pH of the formulation. This pH increase is achieved by means of solid pH modifiers and pH modifiers that evaporate with the solvent. Suitable modifiers are NaOH, aminomethyl propanol (AMP), that in combination of the above cited glycol, allow to achieve, stabilize and maintain the pH for the necessary time. AMP compound was found to be an excellent pH stabilizer, as well as a pH modifier with NaOH.

The indicator used will undergo a colour transition by passing from the basic pH solution either already existing in the water-based paint or specifically raised to this value, to the dried paint.

A preferred range of glycols is comprised of between 0,08 and 6,0 of weight and more preferably in the range from 1,0 e 4,5% of the total formulation weight.

Typically, the formulation according to the invention comprises the following composition:

**Table 1.**

| | |
|---|---|
| cellulose thickener | from 0.1 to 3 % w/w |
| preservative | from 0.05 to 1.5 % w/w |
| antifoaming agent | from 0.05 to 2 % w/w |
| ethylene glycol | from 0.2 to 5,0 % w/w |
| diethylene glycol | from 0.2 to 5,0 % w/w |
| polypropylene (or polyethylene) glycol | from 0.1 to 2.8 % w/w |
| polymer dispersant | from 0.1 to 3 % w/w |
| wetting agent | from 0.01 to 3 % w/w |
| coalescent | from 0,1 to 3 % w/w |
| vinyl resin | from 1 to 30 % w/w |
| calcium carbonate | from 5 to 80 % w/w |
| titanium dioxide | from 0.1 to 30 % w/w |
| NaOH | from 0.1 to 1,0 % w/w |
| AMP | from 0.1 to 4,0 % w/w |
| water | to 100 % w/w |

Besides the mentioned vinyl and aryl resins, also other filmogenic resins suitable for use in the formulation of the invention may be used, such as for example:
acrylic styrol, vinyl maleate, polyurethane and vinyl-versatate.

Generally, the compounds used for the formulations according to the invention must be stable at the pH used.

In some cases other pH preferential modifiers can be used in addition to NaOH and AMP, chosen between ammonia, lime hydrates, slaked lime, alcaline silicates.

To such a formulation is also added a pH indicator selected from those known in the art, in function of the final paint colour.

The quantity of the pH indicator used is that which is sufficient to impart a visible colour to the paint in aqueous form, without perceptibly influencing the colour of the dried paint itself. Generally, the quantity of the pH indicator is comprised within the range from 0.01 to 2% of the total formulation weight (w/w).

The following table summarises the indicators most often used and suited to the use herein described.

**Table 2.**

| name | acidic form colour | basic form colour | transition pH |
|---|---|---|---|
| phenol red | yellow | red | 6.4 - 8.0 |
| cresol red | yellow | red | 7.2 - 8.8 |
| 1-naphtholphthalein | pink | green | 7.3-8.7 |
| thymol blue | yellow | blue | 8.0 - 9.6 |
| phenolphthalein | colourless | bluish red | 8.0 - 9.9 |
| thymolphthalein | colourless | blue | 9.3 - 10.5 |

As mentioned above, the preferred indicators are those that are normally colourless, *i.e.* phenolphthalein and thymolphthalein; the phenolphthalein is preferred as it has a transition pH lower than that of thymolphthalein.

The invention will now be described in greater detail with reference to the following examples for illustrative and non limitative purpose.

### Example 1. Preparation of a white paint.

A white base paint, having the following formulation, is prepared:

| | |
|---|---|
| cellulose thickener | 1.5 % w/w |
| preservative | 1.0 % w/w |
| antifoaming agent | 0.2 % w/w |
| ethylene glycol | 0.98 % w/w |
| diethylene glycol | 2,0 % w/w |
| polymer dispersant | 0.1 % w/w |
| wetting agent | 0.1 % w/w |
| coalescent | 0.1 % w/w |
| vinyl resin | 7.0 % w/w |
| calcium carbonate | 60.0 % w/w |
| titanium dioxide | 8.0 % w/w |
| NaOH | 0.05 % w/w |
| AMP | 1.2 % w/w |
| water | to 100 % w/w |

The pH of the paint is about 9.0.

To the basic formulation thus obtained is added 0.2% by weight (as a percentage of the total weight of the final formulation) of phenolphthalein , in order to give a pink coloured product.

### Example 2. Application of the paint of example 1.

The paint of example 1 is applied using a roller, brush or spray to a wall provided already with a layer of dried paint. The paint according to the invention may obviously be applied both to new backgrounds and to paints of any already existing colour.

The layer of paint according to the present invention, when applied to the support, appears distinct with respect to that already present, thanks to the pink colouring. This allows to apply an uniform layer of the new paint.

Following drying, the colour is uniform and white.

### Example 3. Comparison between formulations.

A support, as from the preceding example, is divided into two separate and adjacent areas, to which the formulation according to the invention and the identical formulation, however without pH indicator, are respectively applied.

The pink colour is perfectly perceptible and allows to distinguish the two paints when wet.

Following drying, the two paints are indistinguishable and it is not possible to determine the point of overlap between them.

The formulation according to the invention presents the advantage of making the area, where a new layer of paint is applied, even if the application is tone to tone or colour to colour. Even if the preferred application described is that of a white paint, it is possible to apply the same principle also to other paint colours, particularly to the pale colours, by appropriately selecting the most suitable pH indicator for the application.

## Claims

1. A water-based coating formulation, **characterised by** comprising a pH indicator capable of changing colour with the drying of the paint, **characterized in that** it comprises NaOH, AMP (2-amino-2-methyl-propanol) and at least one glycol selected between ethylene and diethylene glycol.

2. The formulation according to claim 1, wherein said formulation comprises NaOH within the range from 0.01 to 5.0%, AMP within the range from 0,1% to 5,0%, ethylene and diethylene glycol within the range between 0,2 and 6,0%.

3. The formulation according to claim 2, wherein the amount of said indicator is comprised within the range from 0.01 to 3.0% by weight of the total formulation.

4. The formulation according to one of the previous claims, wherein said indicator is selected from phenolphthalein and thymolphthalein.

5. The formulation according to one of the previous claims, also comprising propylene glycol.

6. A process for the preparation of a water-based coating formulation according to one of the previous claims, **characterised by** adding a pH indicator to said formulation, during or subsequent to its production, in order to provide the same with a colour different from that of the paint after drying.

7. The process according to claim 6, wherein the pH of the paint is basic.

8. Use of AMP (2-amino-2-methyl-propanol) as pH modifier and stabilizer for the preparation of a paint formulation according to one of the claims 1 to 5.
